(19) Europäisches Patentamt
European Patent Office
Office européen des brevets

(11) **EP 3 648 895 B1**

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(21) Anmeldenummer: **18737238.8**

(22) Anmeldetag: **02.07.2018**

(51) Int Cl.:
**B04B 11/02** (2006.01)      **B04B 15/06** (2006.01)
**F16L 55/053** (2006.01)

(86) Internationale Anmeldenummer:
**PCT/EP2018/067803**

(87) Internationale Veröffentlichungsnummer:
**WO 2019/007903 (10.01.2019 Gazette 2019/02)**

(54) **ANLAGE ZUR ZENTRIFUGALEN KLÄRUNG EINER SUSPENSION**

FACILITY FOR THE CENTRIFUGAL CLARIFICATION OF A SUSPENSION

INSTALLATION DE CLARIFICATION D'UNE SUSPENSION PAR CENTRIFUGATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2017 DE 102017115112**

(43) Veröffentlichungstag der Anmeldung:
**13.05.2020 Patentblatt 2020/20**

(73) Patentinhaber: **GEA Mechanical Equipment GmbH 59302 Oelde (DE)**

(72) Erfinder:
• **HERBERG, Wolf-Dietrich 58456 Witten (DE)**
• **BERLAGE, Meinolf 33378 Rheda-Wiedenbrück (DE)**

(74) Vertreter: **Specht, Peter Loesenbeck - Specht - Dantz Patent- und Rechtsanwälte Am Zwinger 2 33602 Bielefeld (DE)**

(56) Entgegenhaltungen:
**DE-A1-102004 022 078      DE-A1-102014 212 021 DE-C1- 4 004 459**

**Beschreibung**

Die vorliegende Erfindung betrifft eine Anlage zur zentrifugalen Klärung einer Suspension, sowie eine Verwendung der Anlage und ein Verfahren zur zentrifugalen Klärung der Suspension.

Bei der Entleerung einer Zentrifugentrommel kann es dazu kommen, dass der Flüssigkeitsstrom am Auslass aufgrund des Feststoffausstosses kurzzeitig stillsteht. Ist die Entleerung beendet, so setzt der Flüssigkeitsstrom schlagartig wieder ein, was zu einem Druckimpuls in angeschlossenen Rohrleitungen führt. Rohrleitungen welche an den Flüssigausgang der Zentrifuge angeschlossen sind führen aufgrund dieser Druckpulse Schwingungen aus, die die mechanische Befestigung der Rohrleitungen und der daran angeschlossenen Aggregate belasten.

Im Stand der Technik werden bereits eine Reihe von Möglichkeiten zur Dämpfung eines Druckschub beschrieben, welche den Einsatz von Gas zur Dämpfung von Druckschüben nutzen. Die DE 10 2004 022 078 A1 beschreibt ein Leitungssystem zur Verteilung von Flüssigkeiten in welchem Drücke von 50 bis 150 bar auftreten können. Dadurch kommt es zu einem Effekt welcher als "Overfogging" beschrieben wird. Die Druckschrift erörtert die Lösung in diesem technischen Bereich durch Einsatz eines Gasvolumens zur Dämpfung des Druckes.

Weiterer relevanter Stand der Technik ist aus der DE 40 04 459 C1, welche die Merkmale des Oberbegriffs von Anspruch 1 offenbart, sowie aus der DE 10 2014 212 021 A1 bekannt.

Auch auf anderen Technologiebereichen wird bereits ein Gasvolumen zur Dämpfung von Druckschüben eingesetzt. Eine entsprechende Dämpfungsvorrichtung wird im Stand der Technik auch als Hydrophore bezeichnet und ist an sich bekannt. Allerdings existieren je nach Art des Einsatzgebietes auch andere Varianten um Druckschübe abzufangen. So sind beispielsweise auch Ausdehnungsgefäße, sogenannte Expansionsgefäße, bekannt, welche Druckschübe durch Eigenausdehnung oder Ausdehnung einer Innenmembran abfangen.

Es ist daher Aufgabe der vorliegenden Erfindung mechanische Belastungen von an die Zentrifuge angeschlossenen Aggregate und Rohrleitungen zu verringern und zugleich eine kompakte Lösung in Form einer Anlage anzubieten in welcher die Zentrifuge integriert ist.

Die vorliegende Erfindung löst diese Aufgabe durch eine Anlage zur zentrifugalen Klärung einer Suspension mit den Merkmalen des Anspruchs 1.

Eine Anlage zur zentrifugalen Klärung einer Suspension unter Bereitstellung eines ersten geklärten flüssigen Mediums mit einem Mediumsdruck umfasst eine Zentrifuge und eine Vorrichtung zur Dämpfung von Druckschüben.

Die Suspension kann beispielsweise ein Bier oder Biervorprodukt sein, welches im Rahmen der zentrifugalen Bearbeitung geklärt wird. Eine entsprechende Bearbeitung in Form einer Klärung kann allerdings auch bei Apfelsaft, Wein, Cidre oder anderen Suspensionen erfolgen.

Druckschübe der vorbeschriebenen Art können beispielsweise bei einer intervallartigoder diskontinuierlich-entleerenden Zentrifuge, insbesondere jedoch bei einem Separator mit einem sogenannten Kolbenschieber, auftreten. Derartige Separatoren mit Kolbenschiebern sind an sich seit vielen Jahrzehnten bekannt.

Die an die Zentrifuge angeschlossene Vorrichtung zur Dämpfung von Druckschüben umfasst ein Behältnis zur Durchleitung des von der Zentrifuge abgeleiteten Mediums. Hierfür kann eine Zulaufleitung der Vorrichtung in dem Behältnis an den Flüssigkeitsauslass der Zentrifuge angeordnet sein. Diese Zulaufleitung ist dabei vorzugsweise unmittelbar an den Flüssigkeitsauslass angeordnet. Das Behältnis weist zudem eine Einleitung zum Zuleiten eines Spanngases in das Behältnis auf.

Das Volumen des Behältnisses ist dabei maximal um das Zweifache größer als das Aufnahmevolumen der Zentrifuge, so dass es sich bei dem Behältnis nicht um einen größer dimensionierten Lagertank für eine Suspension oder dergleichen handelt. Das Volumen des Behältnisses kann selbstverständlich auch kleiner sein als das Aufnahmevolumen der Zentrifuge. Das Aufnahmevolumen ist dabei das Volumen mit welchem die Zentrifuge ohne Entleerung maximal befüllt werden kann. Die Vorrichtung mit dem Behältnis ist somit als Hydrophore zu verstehen. Allerdings können für die Vorrichtung auch konventionelle Rohre des Rohrleitungsbaus genutzt werden, wobei das Behältnis als ein Rohr vorzugsweise mit größerer Nennweite als eine Zulauf- und/oder Ablaufleitung in das Behältnis ausgebildet sein kann. Das Rohr ist dabei vorzugsweise ein Rohr gemäß einer üblichen EN-Rohrklasse. Auf die Verwendung eines Druckbehälters, wie er im Fall einer Hydrophore verwendet wird, kann dabei vorteilhaft verzichtet werden. Der Einsatz der vorgenannten Vorrichtung an einem Flüssigkeitsauslass einer Zentrifuge ist bislang nicht bekannt. Die Vorrichtung ermöglicht dabei eine Druckschubdämpfung was die mechanische Belastung nachfolgender Aggregate, z.B. Abfülltanks, Dosieranlagen und dergleichen verringert.

Durch die Vorrichtung werden Druckschübe beim Entleeren der Zentrifuge vorteilhaft gedämpft oder sogar vollständig eliminiert.

Vorteilhafte Ausgestaltungen der Erfindung sind Gegenstand der Unteransprüche.

Überraschend wurde gefunden, dass trotz der sehr intensiven Druckschübe, welche bei einer Zentrifuge auftreten, es ausreicht die Druckschübe insbesondere bei der Entleerung der Zentrifuge mit einem einzigen Behältnis zu dämpfen. Dies ist somit eine Lösung in kompakter Bauweise für die vorgenannte Problemstellung.

Dabei ist das Spanngas vorzugsweise unmittelbar benachbart zu dem geklärten Medium im Behälter angeordnet.

Die Zuleitung des geklärten Mediums in das Behältnis erfolgt bevorzugt unterhalb des Flüssigkeitsstandes im Behältnis, insbesondere unterhalb eines Grenzstandes.

Eine Ableitung des geklärten Mediums aus dem Behältnis kann an der tiefsten Stelle des Behältnisses erfolgen.

Die Vorrichtung kann vorteilhaft zur Einstellung des Flüssigkeitsspiegels im Behältnis ein erstes Messgerät aufweisen. Dieses dient zur Ermittlung eines unteren Grenzstandes des Mediums im Behältnis. Hierfür kann beispielsweise ein Grenzstandschalter oder ein Füllstandsmessgerät genutzt werden. Dieses Messgerät kann vorteilhaft entlang der Gehäusewandung des Behältnisses angeordnet sein.

Das Behältnis kann zudem eine separate Zulaufleitung und eine separate Ablaufleitung für das Medium aufweisen. Dadurch kann der Aufbau der Vorrichtung sehr einfach gehalten werden.

Vorteilhaft weisen die Zulauf- und Ablaufleitung der Vorrichtung den gleichen Durchmesser auf.

Die Zulaufleitung kann dabei vorteilhaft unterhalb des Grenzstandes angeordnet sein.

Die Anlage weist zudem eine Auswerteeinheit auf, die ausgerüstet ist zur Einstellung eines Gasvolumens in Abhängigkeit eines oberen Grenzstandes des Mediums im Behältnis. Dies kann durch Ermittlung des oberen Grenzstandes erfolgen und sodann durch Nachführen einer Menge des Spanngases mit einem vorbestimmten Druck.

Die Anlage kann zudem einen Bypass vorzugsweise mit einem Bypassventil aufweisen, welcher die rohrförmige Einleitung für das Spanngas direkt mit der Ablaufleitung für das Medium verbindet.

Die Einleitung für das Spanngas weist erfindungsgemäß einen separaten Ein-und/oder Ausleitungsanschluss für ein Reinigungsmedium auf, so dass im Falle einer Reinigung das Reinigungsfluid auch den Einleitungsbereich des Spanngases reinigt.

Gerade bei Anwendungen mit schaumbildenden Produkten wie Bier kann dies von Vorteil sein, da auch die Einleitung im Fall eines stärkeren Druckschlags ggf. auch einen produktberührenden Bereich darstellen kann, welchen es zu reinigen gilt.

Für eine optimale Druckverteilung ist es zudem von Vorteil, wenn die Einleitung an einem oberen Ende des Behältnisses angeordnet ist. Das Behältnis ist dabei rohrförmig ausgebildet und weist eine Längsachse auf.

Es ist von Vorteil, wenn die Ablaufleitung des Mediums und/oder ein Ein- und/oder Ausleitungsanschluss für das Reinigungsmedium am unteren Ende des Behältnisses angeordnet ist. Somit ist eine umfassende Reinigung und eine optimale Führung des Reinigungsfluids innerhalb des rohrförmigen Behältnisses gewährleistet.

Bevorzugt kann die Mantelfläche des Behältnisses als ein konventionelles Rohr gemäß einer EN-Rohrklasse ausgebildet sein.

Der Behältnis mit zumindest bereichsweise einer rohrförmiger Mantelfläche kann zumindest bereichsweise einen rohrförmigen Gehäusemantel aufweisen mit einem mittleren Durchmesser, welcher zumindest doppelt so groß, vorzugsweise 2,5 bis 10-mal so groß, wie der mittlere Durchmesser der Zu- und/oder der Ablaufleitung. Somit kommt es bereits zu einer Druckverringerung des Mediums bei dessen Einleitung in das Behältnis. Dieser Mediumsdruck wird im Fall eines Druckschubes sodann aufgrund des Spanngases gedämpft und wird gleichmäßig auf die Gehäusewandung des Behältnisses übertragen.

Besonders vorteilhaft ist die Verwendung der erfindungsgemäßen Anlage zur zentrifugalen Bearbeitung einer gashaltigen Suspension, vorzugsweise eines kohlensäurehaltigen Getränks, insbesondere von Bier. Dabei kommt es durch die Nutzung der Vorrichtung mit dem Spanngas nicht zu einer Verringerung des $CO_2$-Gehaltes im Bier oder einer ähnlichen Suspension bei dessen Entleerung aus der Zentrifuge.

Weiterhin erfindungsgemäß ist ein Verfahren zur zentrifugalen Klärung einer Suspension in der erfindungsgemäßen Anlage unter Bereitstellung eines geklärten flüssigen Mediums umfassend die folgenden Schritte:

     a) Klärung der Suspension in der Zentrifuge, insbesondere in einem Separator, unter Bereitstellung des geklärten flüssigen Mediums mit einem Mediumsdruck oberhalb von 1 bar.
     b) Durchleiten des geklärten Mediums durch das Behältnis der Vorrichtung, wobei im Behältnis ein Spanngas mit einem Gasdruck von über 1 bar angeordnet ist, wobei folgender Zusammenhang gilt:

$$p(M) = p(SG)$$

Da das Spanngas im Falle eines Druckschubes komprimiert wird und sich dadurch der Druck des Spanngases dem Mediumsdruck angleicht gilt der vorgenannte Zusammenhang nach Einstellung eines Druck-Gleichgewichts auch im Falle eines Druckschubes.

Das Spanngas kann vorteilhaft ein Inertgas, vorzugsweise Kohlendioxid, Stickstoff oder ein Edelgas, sein. Dies ist besonders von Vorteil, da zwischen dem Spanngas und dem geklärten Medium keine Membran angeordnet ist sondern das Spanngas idealerweise unmittelbar benachbart zum geklärten Medium angeordnet ist. Dabei wird durch Verwendung des Inertgases eine unerwünschte chemische Nebenreaktion (z.B. Oxidation der Inhaltsstoffe des Mediums) vorteilhaft verhindert.

Das Spanngas ist bevorzugt beim Durchleiten des Mediums unmittelbar benachbart zum geklärten Medium angeordnet.

Nach der Bearbeitung der Flüssigkeit, also z.B. des Bieres, kann eine CIP-Reinigung der Anlage, einschließlich der Vorrichtung erfolgen. Hierfür kann die Vorrichtung separate Anschlüsse zum Ausleiten einer Reinigungsflüssigkeit aufweisen.

Die Entleerung der Zentrifuge kann nach dem vorgenannten Verfahren vorzugsweise intervallartig oder diskontinuierlich erfolgen, wobei ein in der Zulaufleitung der Vorrichtung vorherrschender entleerungsbedingter Druckschub, also ein pulsartiger Druckanstieg, in der Ablaufleitung der Vorrichtung um zumindest 50% verringert wird.

Die Erfindung wird nachfolgend anhand eines Ausführungsbeispiels und mittels einer Zeichnung näher erläutert. Es zeigt:

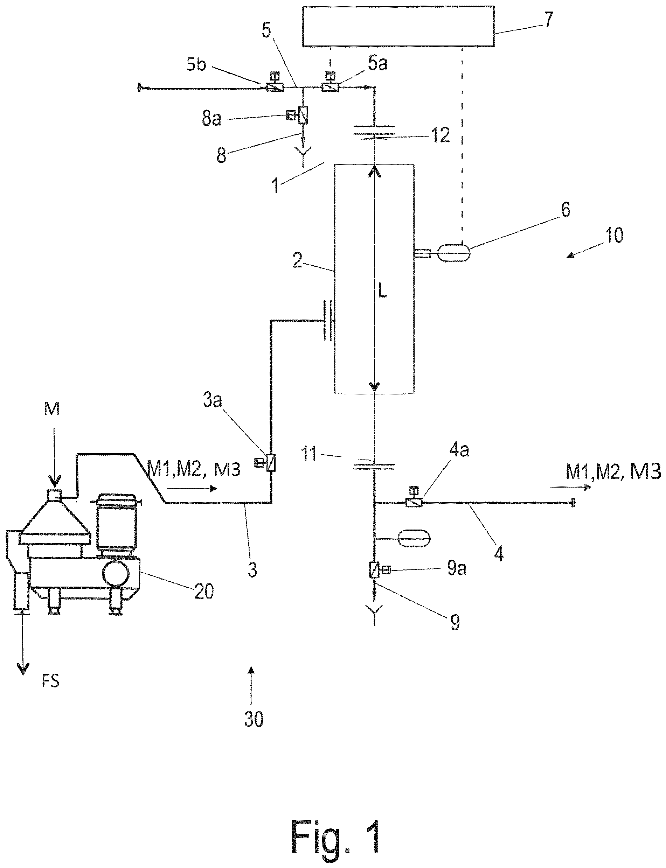

Fig. 1     eine Ausführungsvariante einer erfindungsgemäßen Anlage.

Die in Fig. 1 dargestellte Anlage 30 zur zentrifugalen Klärung einer Suspension M unter Erzeugung eines geklärten Mediums M2 umfasst eine Zentrifuge 20, vorzugsweise einen Separator insbesondere mit vertikaler Drehachse, und eine Vorrichtung 10 zur Dämpfung von Druckschüben. Derartige Druckschübe können auftreten wenn ein in der Zentrifuge gesammelter Feststoff FS innerhalb kürzester Zeit, z.B. 1 Sekunde, entleert wird. Durch die Feststoff-Entleerung kommt es zu einer Verringerung des Durchflusses im Flüssigkeitsauslass der Zentrifuge bis hin zu einem Durchfluss-Stillstand oder sogar zu einem Negativ-Durchfluss. Anschließend steigt der Durchfluss wieder an, was einen Druckschub bewirkt.

Fig. 1 zeigt eine Vorrichtung 10 zur Dämpfung von Druckschüben umfassend einen Behältnis 1 mit einer rohrförmigen Mantelfläche 2, vorzugsweise mit einem einheitlichen Rohrquerschnitt, welche sich zumindest über einen Teilbereich der Länge oder über die gesamte Länge des Behältnisses entlang der Längsachse des Behältnisses 1 erstreckt. Die Mantelfläche 2 kann sich bevorzugt über zumindest 50% der Länge L des Behältnisses erstrecken.

Das Behältnis 1 weist eine rohrförmige Zulaufleitung 3 für ein geklärte flüssige Medium M2 von einer Zentrifuge 20 der Anlage 30 zu der Vorrichtung 10 auf. Die rohrförmige Zulaufleitung 3 kann ein Ventil 3a aufweisen.

Das Behältnis 1 weist zudem eine rohrförmige Ablaufleitung 4 für das geklärte Medium M2 mit einem Ablaufventil 4a sowie eine Einleitung 5 für ein Spanngas SG mit einem Ventil 5a auf. Das Behältnis 1 weist ein erstes Messgerät 6 zur Überwachung eines Grenzstandes auf. Das Messgerät 6 kann vorzugsweise ein Füllstandsmessgerät oder ein Grenzstandsschalter sein.

Der Durchmesser des Behältnisses 1 kann im Bereich der Mantelfläche 2 zumindest das Doppelte, vorzugsweise zumindest das Dreifache, des Durchmessers der Zulaufleitung 3 aufweisen.

Besonders bevorzugt beträgt der mittlere Durchmesser des Behältnisses 1 im Bereich der Mantelfläche 2 zwischen 100 bis 500 mm. Demgegenüber weist die Zulaufleitung 3 und/oder die Ablaufleitung 4 einen mittleren Durchmesser zwischen 25 bis 125 mm auf.

Als mittlerer Durchmesser ist im Kontext der Erfindung beispielsweise der Mittelwert aller Durchmesser eines mehreckigen Rohres entlang eines Rohrquerschnitts zu verstehen. Gleiches gilt für Rohre mit ovalen Rohrquerschnitt oder anderweitiger Rohrquerschnitte.

Die Anpassung des Rohrquerschnitts von der Zulaufleitung 3 und/oder der Ablaufleitung 4 in den Behältnis 1 kann vorteilhaft mit Standardreduzierungen oder Böden erfolgen, die bevorzugt keine weiteren Prüfungen für Druck oder Bauart benötigen.

Nachfolgend wird die Funktionsweise der Vorrichtung 10 im Detail näher erklärt:

In Schritt 1 erfolgt die Befüllung des Behältnisses mit der zumindest bereichsweise rohrförmig ausgebildeten Mantelfläche 1 mit einem ersten Medium M1, typischerweise von Wasser. Die Befüllung kann bis zur vollständigen Befüllung des Behältnisses 1 mit dem ersten Medium M1 erfolgen. Das Zulauf- und Ablaufventil 3a und 4a sind dabei geöffnet. Das Ventil 5b kann dabei geschlossen sein. Das Medium M1 weist dabei einen Mediumsdruck p(M1) auf. Die Ventile 5a und 8a können zur eventuellen Entlüftung des Behälters 1 und der Rohrleitungen geöffnet sein.

In Schritt 2 erfolgt die Druckbeaufschlagung des Mediums M1 mit dem Spanngas SG. Durch die Druckbeaufschlagung erfolgt eine Verdrängung des ersten Mediums M1 bis der untere Grenzstand unterschritten ist. Dies wird durch das Messgerät 6 detektiert. Dabei sind die Ventile 3a, 4a weiterhin geöffnet um eine Verdrängung des Mediums zu gewährleisten. Allerdings wird durch das Spanngas SG nunmehr ein vorbestimmter Gegendruck, als Gasdruck p(SG), erzeugt, welcher bei Unterschreiten des Grenzstandes derart verringert wird, dass sich ein Gleichgewicht einstellt. Es gilt sodann:

$$p(M1) = p(SG)$$

Sodann werden die Ventile 3a und 4a geschlossen und das Einleiten des eigentlichen geklärten Mediums M2, welches zuvor durch die Zentrifuge 20 bearbeitet wurde, kann erfolgen. Das erste Medium M1 kann ebenfalls durch die Zentrifuge 20 geleitet werden.

Die Schritte 1 und 2 sind daher vorbereitende Schritte vor der Befüllung der erfindungsgemäßen Anlage mit eigentlichen durch die Anlage zu verarbeitenden ersten Medium.

In Schritt 3 erfolgt das Befüllen des Behältnisses mit diesem geklärten flüssigen Medium M2, welches zuvor durch die Zentrifuge 20 bearbeitet wurde. Dieses geklärte Medium M2 kann vorzugsweise ein kohlensäurehaltiges Medium, z.B. Bier, sein. Dieses geklärte Medium M2 verdrängt beim Befüllen des Behältnisses 1 das erste Medium M1. Idealerweise entspricht der Mediumsdruck des geklärten Mediums p(M2) dem Mediumsdruck des ersten Mediums p(M1).

Die Zuführung des geklärten flüssigen Mediums M2 in das Behältnis 1 kann auf radial oder tangential erfolgen. Tangential bedeutet dass die Zuführung des Mediums M in das Behältnis 1 nicht senkrecht zur Längsachse des Behältnisses erfolgt.

Innerhalb des Behältnisses 1 kann optional ein zweites Messgerät zur Ermittlung eines weiteren oberen Grenzstandes angeordnet sein.

Die Regelung der Ventile 3a, 4a und 5a erfolgt in allen Fällen durch eine Auswerteeinheit 7, welche die Messsignale des ersten Messgerätes 6 und ggf. des nicht-dargestellten zweiten Messgerätes empfängt und eine entsprechende Ventilregelung zur Einleitung und Ableitung der Medien M1, M2 und/oder des Spanngases SG vornimmt.

Das zulaufende erste Medium kann dabei entweder tangential oder, wie in Fig. 1 dargestellt, radial in den Behältnis 1 geleitet werden und verlässt diesen über die Ablaufleitung 4. Aus dem Anlagengegendruck des Spanngases und dem Volumen des Spanngases ergibt sich ein stabiler Zustand für den Füllstand im Behältnis 1 unter Ausbildung eines komprimierbaren Gasvolumens im oberen Bereich des Behältnisses. Kommen Druckschübe aus der Zulaufleitung 3, verteilt sich die Energie des Druckschubes auf die gesamte Behältnis 1, so dass an der Ablaufleitung 4 nur noch eine minimale Druckänderung festzustellen ist, die die nachfolgenden Leitungen und Aggregate nicht beeinflusst. Beim Einlauf von Gasblasen in das Behältnis mit zumindest bereichsweise einer rohrförmigen Mantelfläche steigen diese auf und werden an der Oberfläche abgeschieden.

Sofern kein Druckschub auftritt, wird das geklärte Medium M2 mit gleichbleibendem Füllstand durch das unter Druck befindlichen Behältnis 1 geleitet.

Im Falle eines Druckschubs bleibt der Druck hinter dem Ablaufventil 4a annähernd konstant, da der Druckschub durch Kompression des Spanngases abgefangen wird.

Am Ende der zentrifugalen Verarbeitung der zu klärenden Suspension erfolgt ein Verdrängen des geklärten Mediums M2 im Behältnis 1 durch Einleiten eines Reinigungsmediums in das Behältnis 1. Beim Reinigungsmedium M3 handelt es sich vorzugsweise um Wasser oder eine Reinigungslösung.

Über zusätzliche Ausleitungsanschlüsse 8, 9 mit entsprechenden Ventilen 8a, 9a kann somit optional eine gesonderte CIP-Reinigung des Behältnis durch Einleiten eines Reinigungsmediums M3 erfolgen.

Durch Zwischenschaltung der in Fig. 1 dargestellte Vorrichtung 10 kann ein Druckschub-Entkoppelung von Aggregaten und Rohrleitungssystemen, welche an die Zentrifuge 20 angeschlossen werden sollen, erfolgen.

Die Kompensation von dynamischen Druckschüben durch die Vorrichtung 10 kann bei einer drastischen Durchflussänderung zudem eine Abscheidung von Gasblasen aus der Flüssigkeit verhindern, so dass im Fall von Bier kein Kohlendioxid dem Bier entweicht. Darüber hinaus kann in einem gewissen Rahmen eine Durchflusskompensation erfolgen.

Die Nutzung der Vorrichtung 10 in der erfindungsgemäßen Anlage 30 mit einer Zentrifuge 20 ist besonders hilfreich, sofern weitere Aggregate an die Vorrichtung angeschlossen werden sollen. Da bei den Entleerungen einer Zentrifuge der auslaufende kurzzeitige Flüssigkeitsstrom stillsteht, kommt es einerseits zu Druckschüben, die beim Auftreffen nachkommender Flüssigkeit auf die stehende Säule massiv auftreten und andererseits zu Sättigungsdruckunterschreitung bei gashaltigen Produkten, die zur Gasblasenbildung bzw. zu einem verminderten Gasgehalt, z.B. in einem kohlesäurehaltigen Getränk, führen. Dies wird die Anlage 30 mit der Zentrifuge 20 und der Vorrichtung 10 im Anschluss an einer Zentrifuge 20 vorteilhaft vermieden.

Das Behältnis 1 ist zudem reinigbar. Zur Reinigung kann das untere Ablaufventil 4a geschlossen und ein Reinigungsmedium M3 nach seiner Zuleitung durch die Zulaufleitung 3 dem Behältnis 1 zugeleitet werden. Dabei kann das Behältnis 1 vollständig mit dem Reinigungsmedium M3 geflutet werden.

An einem unteren Ende 11 des Behältnisses 1 und an einem oberen Ende 12 des Behältnisses 1 kann das Reinigungsmedium M3 abgeleitet werden. Das Reinigungsmedium M3 kann ebenfalls bevorzugt radial in das Behältnis 1 eingeleitet werden. Das obere und untere Ende beziehen sich dabei auf das Erdschwerefeld. Durch eine tangentiale Einströmung des Reinigungsmediums M3 kann in den Behältnis 1 eine Rotation der Reinigungsflüssigkeit, also als eine Drehströmung, erfolgen, die die Reinigung zusätzlich unterstützt.

Bei Ableiten des Reinigungsmediums M3 durch die Ausleitungsanschlüsse 8, 9 wird dieses anschließend verworfen.

Die Ventile 8a und 9a können bei der Reinigung getaktet bzw. alternierend geschaltet werden, um so möglichst wenig Verlust an Reinigungsmedium zu erreichen. Zugleich können die Ventile 3a und 4a so geschalten werden, dass das Reinigungsmedium M3 kontinuierlich durch die Vorrichtung 10 durchgeleitet wird. Auf diese Weise kann komplette Anlage 30 im CIP-Verfahren gereinigt werden.

Nach der Reinigung kann das Behältnis 1 entleert werden und die Vorrichtung kann mit den Schritten 1 und 2 abermals auf die Zuführung des ersten Mediums M1 vorbereitet werden.

Hierfür können Reste des Reinigungsmediums M3 durch abermaliges Zuleiten von Spanngas SG bei zumindest einem geöffneten Ventil 4a, 8a und/oder 9a aus der Vorrichtung 10 herausgedrückt werden.

Selbstverständlich können die Schaltungszustände der Ventile 8a, 9a des Ausleitungsanschlusses 8, 9 für ein Reinigungsflüssigkeit ebenfalls durch die Auswerteeinheit 7 geregelt werden.

Nachfolgend werden einige der Vorteile der Anlage 30 und der Vorrichtung 10 nochmals erläutert:

Die Vorrichtung 10 kompensiert Druckstoße und kann optional Gasblasen abscheiden.

Die Vorrichtung 10 kann zudem vorzugsweise In-Line durch CIP-Verfahren gereinigt werden kann. Dabei wird zur Reinigung der Vorrichtung 10 keine Rücklaufpumpe benötigt.

Durch ein entsprechendes Behältnis mit zumindest bereichsweise einer rohrförmiger Mantelflächenauslegung aus Rohleitungskomponenten weist dieses eine hohe Druck- und Vakuumsicherheit auf.

Die Vorrichtung 10 erfordert dabei einen geringen Aufwand an technischer Dokumentation und kann vorteilhaft und bevorzugt alternierend mit heißen und kalten Medien betrieben und gereinigt werden kann.

Als Spanngas kann vorteilhaft ein Inertgas, bevorzugt Kohlendioxid oder Stickstoff oder ein Edelgas verwandt werden.

Während des Durchlaufs des ersten Mediums durch die Vorrichtung wird zudem keine Pumpe zum Entleeren des Behältnisses bzw. zum Erreichen des Auslaufstromes benötigt.

**Bezugszeichenliste**

| | |
|---|---|
| 1 | Behältnis |
| 2 | Mantelfläche |
| 3 | Zulaufleitung |
| 3a | Zulaufventil |
| 4 | Ablaufleitung |
| 4a | Ablaufventil |
| 5 | Einleitung |
| 5a, 5b | Ventil |
| 6 | Messgerät |
| 7 | Auswerteeinheit |
| 8 | Ausleitungsanschluss |
| 8a | Ventil |
| 9 | Ausleitungsanschluss |
| 9a | Ventil |
| 10 | Vorrichtung |
| 11 | Unteres Ende |
| 12 | Oberes Ende |
| 20 | Zentrifuge |
| 30 | Anlage |

| | |
|---|---|
| M | Suspension |
| M2 | geklärtes Medium |
| M1 | erstes Medium |
| M3 | Reinigungsmedium |
| FS | Feststoff |
| L | Länge |

**Patentansprüche**

1. Anlage (30) zur zentrifugalen Klärung einer Suspension (M) unter Bereitstellung eines geklärten flüssigen Mediums (M2) mit einem Mediumsdruck (p(M2)) umfassend eine Zentrifuge (20) und eine Vorrichtung zur Dämpfung von Druckschüben umfassend ein Behältnis (1) zur Durchleitung des Mediums mit zumindest einer bereichsweise angeordneten rohrförmigen Mantelfläche (2), welches Behältnis (1) an einem Flüssigkeitsauslass der Zentrifuge (20) angeordnet ist, wobei das Behältnis (1) eine Einleitung (5) zum Zuleiten eines Spanngases aufweist, **dadurch gekennzeichnet, dass** das Volumen des Behältnisses (1) maximal zweimal größer ist als das Aufnahmevolumen der Zentrifuge (20), wobei die Anlage (30) eine Auswerteeinheit (7) aufweist und ausgerüstet ist zur Einstellung eines Gasvolumens in Abhängigkeit eines Grenzstandes des Mediums (M) im Behältnis (1) und wobei die Einleitung (5) für das Spanngas (SG) einen separaten Ausleitungsanschluss (8) für ein Reinigungsmedium aufweist.

2. Anlage nach einem der vorhergehenden Ansprüche, **dadurch gekennzeichnet, dass** die Vorrichtung (10) ein erstes Messgerät (6) aufweist zur Überwachung und/oder Ermittlung eines Grenzstandes des Mediums (M) im Behältnis mit zumindest bereichsweise einer rohrförmiger Mantelfläche (2).

3. Anlage nach einem der vorhergehenden Ansprüche, **dadurch gekennzeichnet, dass** der Behältnis eine Zulaufleitung und eine Ablaufleitung (3, 4) für das Medium (M) aufweist.

4. Anlage nach Anspruch 3, **dadurch gekennzeichnet dass** die Zulaufleitung (3) unterhalb des Grenzstandes angeordnet ist.

5. Anlage nach einem der vorhergehenden Ansprüche, **dadurch gekennzeichnet, dass** die Einleitung (5) an einem oberen Ende (12) des Behältnisses (1) angeordnet ist.

6. Anlage nach einem der vorhergehenden Ansprüche, **dadurch gekennzeichnet, dass** die Ablaufleitung (4) des Mediums (M) und/oder ein Ausleitungsanschluss (9) für ein Reinigungsmedium am unteren Ende (11) des Behältnisses (1) angeordnet ist.

7. Anlage nach einem der vorhergehenden Ansprüche, **dadurch gekennzeichnet, dass** der Ausleitungsanschluss (8) oder die Ausleitungsanschlüsse (8, 9) jeweils zumindest ein Ventil (8a, 9a) aufweist, wobei die Schaltungszustände des Ventils (8a) oder der Ventile (8a, 9a) durch die Auswerteeinheit (7) regelbar sind.

8. Anlage nach einem der vorhergehenden Ansprüche, **dadurch gekennzeichnet, dass** die rohrförmigen Mantelfläche des Behältnisses (1) einen mittleren Durchmesser aufweist, welcher zumindest doppelt so groß, vorzugsweise 2,5 bis 10-mal so groß, wie der mittlere Durchmesser der Zu- und/oder der Ablaufleitung (3, 4) ist.

9. Anlage nach einem der vorhergehenden Ansprüche, **dadurch gekennzeichnet, dass** die Mantelfläche des Behältnisses (1) als ein Rohr gemäß einer EN-Rohrklasse ausgebildet ist.

10. Verwendung der Anlage (30) nach einem der vorhergehenden Ansprüche zur Klärung einer gashaltigen Suspension (M), vorzugsweise eines kohlensäurehaltigen Getränks, insbesondere von Bier.

11. Verfahren zur zentrifugalen Klärung einer Suspension unter Bereitstellung eines geklärten flüssigen Mediums (M2) in einer Anlage nach einem der vorhergehenden Ansprüche 1 - 9, umfassend die folgenden Schritte:

    a) Bearbeitung der Suspension (M) in der Zentrifuge (20), insbesondere in einem Separator, unter Bereitstellung des geklärten Mediums (M2) mit einem Mediumsdruck (p(M2)) oberhalb von 1 bar.
    b) Durchleiten des geklärten Mediums (M2) durch das Behältnis (1) der Vorrichtung (10) wobei im Behältnis (1) ein Spanngas mit einem Gasdruck (p(SG)) angeordnet ist, wobei folgender Zusammenhang gilt:

$$p(M2) = p(SG)$$

wobei die Einstellung eines Gasvolumens in Abhängigkeit eines Grenzstandes des Mediums (M) im Behältnis (1) über eine Einleitung (5) für Spanngas erfolgt und
wobei die Einleitung (5) für das Spanngas (SG) einen separaten Ausleitungsanschluss (8) für ein Reinigungsmedium aufweist.

12. Verfahren nach Anspruch 11, **dadurch gekennzeichnet, dass** das Spanngas ein Inertgas, insbesondere $CO_2$, $N_2$ oder ein Edelgas, ist.

13. Verfahren nach Anspruch 11 oder 12, **dadurch gekennzeichnet, dass** das Spanngas (SG) beim Durchleiten des geklärten Mediums (M2) unmittelbar benachbart zum geklärten Mediums (M2) angeordnet ist.

14. Verfahren nach einem der vorhergehenden Ansprüche 11 - 13, **dadurch gekennzeichnet, dass** nach der Bearbeitung der Flüssigkeit eine CIP-Reinigung der Anlage (30), einschließlich der Vorrichtung (10) erfolgt.

**Claims**

1. Equipment (30) for the centrifugal clarification of a suspension (M) by providing a clarified liquid medium (M2) with a medium pressure (p(M2)), comprising a centrifuge (20) and a device for damping pressure surges comprising a container (1) for passing through the medium with at least one in regions arranged tubular jacket surface (2), which container (1) is arranged at a liquid outlet of the centrifuge (20), wherein the container (1) comprises an inlet (5) for supplying a pressurization gas, **characterized in that** the volume of the container (1) is at most twice larger than the intake volume of the centrifuge (20), wherein the Equipment (30) comprises an evaluation unit (7) and is equipped for setting a gas volume as a function of a limit level of the medium (M) in the container (1), and wherein the inlet (5) for the pressurization gas (SG) comprises a separate discharge connection (8) for a cleaning medium.

2. Equipment according to one of the preceding claims, **characterized in that** the device (10) comprises a first measuring device (6) for monitoring and/or determining a limit level of the medium (M) in the container having, at least in regions, a tubular jacket surface (2).

3. Equipment according to one of the preceding claims, **characterized in that** the container has a feed line and an outlet line (3, 4) for the medium (M).

4. Equipment according to claim 3, **characterized in that** the feed line (3) is arranged below the limit level.

5. Equipment according to one of the preceding claims, **characterized in that** the inlet (5) is arranged at an upper end (12) of the container (1).

6. Equipment according to one of the preceding claims, **characterized in that** the outlet line (4) of the medium (M) and/or a discharge connection (9) for a cleaning medium is/are arranged at the lower end (11) of the container (1).

7. Equipment according to one of the preceding claims, **characterized in that** the discharge connection (8) or the discharge connections (8, 9) each have at least one valve (8a, 9a), wherein the circuit states of the valve (8a) or the valves (8a, 9a) can be regulated by the evaluation unit (7).

8. Equipment according to one of the preceding claims, **characterized in that** the tubular jacket surface of the container (1) has a mean diameter which is at least twice as large, preferably 2.5 to 10 times as large, as the mean diameter of the feed and/or outlet line (3, 4).

9. Equipment according to one of the preceding claims, **characterized in that** the jacket surface of the container (1) is designed as a pipe according to an EN pipe class.

10. Use of the Equipment (30) according to one of the preceding claims for clarifying a gas-containing suspension (M), preferably a carbonated beverage, in particular beer.

11. Method for centrifugally clarifying a suspension while providing a clarified liquid medium (M2) in a plant according to one of the preceding claims 1 to 9, comprising the following steps:

a) processing the suspension (M) in the centrifuge (20), in particular in a separator, while providing the clarified medium (M2) with a medium pressure (p(M2)) above 1 bar;
b) passing the clarified medium (M2) through the container (1) of the device (10), wherein a pressurization gas with a gas pressure (p(SG)) is arranged in the container (1), wherein the following relationship applies:

$$p(M2) = p(SG),$$

wherein the gas volume is set as a function of a limit level of the medium (M) in the container (1) via an inlet (5) for pressurization gas, and
wherein the inlet (5) for the pressurization gas (SG) has a separate discharge connection (8) for a cleaning medium.

12. Method according to claim 11, **characterized in that** the pressurization gas is an inert gas, in particular $CO_2$, $N_2$ or a noble gas.

13. Method according to claim 11 or 12, **characterized in that** the pressurization gas (SG) is arranged immediately adjacent to the clarified medium (M2) when the clarified medium (M2) is passed through.

14. Method according to one of the preceding claims 11 to 13, **characterized in that** CIP cleaning of the Equipment (30), including the device (10), is performed after processing the liquid.

**Revendications**

1. Installation (30) pour la clarification par centrifugation d'une suspension (M) produisant un fluide clarifié à l'état liquide (M2) ayant une pression de fluide (p(M2)), comprenant une centrifugeuse (20) et un dispositif pour amortir les coups de pression qui comprend un réservoir (1) pour le passage du fluide, ayant au moins une surface d'enveloppe tubulaire (2) disposée par zones, lequel réservoir (1) est disposé sur une sortie de liquide de la centrifugeuse (20), le réservoir (1) présentant une conduite d'arrivée (5) pour l'acheminement d'un gaz de précontrainte, **caractérisée en ce que** le volume du réservoir (1) est au maximum deux fois plus grand que la capacité de la centrifugeuse (20), l'installation (30) comportant une unité d'analyse (7) et étant équipée en vue d'ajuster un volume de gaz en fonction d'un état limite du fluide (M) dans le réservoir (1) et dans laquelle la conduite d'arrivée (5) pour le gaz de précontrainte (SG) comporte un raccord d'évacuation (8) séparé pour un fluide de nettoyage.

2. Installation selon l'une des revendications précédentes, **caractérisée en ce que** le dispositif (10) présente un premier appareil de mesure (6) destiné à surveiller et/ou à déterminer un état limite du fluide (M) dans le réservoir avec au moins par zones une surface d'enveloppe tubulaire (2).

3. Installation selon l'une des revendications précédentes, **caractérisée en ce que** le réservoir présente une conduite d'arrivée et une conduite d'écoulement (3, 4) pour le fluide (M).

4. Installation selon la revendication 3, **caractérisée en ce que** la conduite d'arrivée (3) est disposée en dessous du niveau limite.

5. Installation selon l'une des revendications précédentes, **caractérisée en ce que** la conduite d'arrivée (5) est disposée à une extrémité supérieure (12) du réservoir (1).

6. Installation selon l'une des revendications précédentes, **caractérisée en ce que** la conduite d'écoulement (4) du fluide (M) et/ou un raccord d'évacuation (9) pour un fluide de nettoyage sont disposés à une extrémité inférieure (11) du réservoir (1).

7. Installation selon l'une des revendications précédentes, **caractérisée en ce que** le raccord d'évacuation (8) ou les raccords d'évacuation (8, 9) présentent chacun au moins une vanne (8a, 9a), les états de commutation de la vanne (8a) ou des vannes (8a, 9a) pouvant être régulés par l'unité d'analyse (7).

8. Installation selon l'une des revendications précédentes, **caractérisée en ce que** la surface d'enveloppe tubulaire du réservoir (1) présente un diamètre moyen qui est au moins deux fois plus grand, de préférence 2,5 à 10 fois plus grand, que le diamètre moyen de la conduite d'arrivée et/ou d'écoulement (3, 4).

9. Installation selon l'une des revendications précédentes, **caractérisée en ce que** la surface d'enveloppe du réservoir (1) est conformée comme un tuyau selon une catégorie de tuyaux EN.

10. Utilisation de l'installation (30) selon l'une des revendications précédentes pour clarifier une suspension (M) contenant du gaz, de préférence une boisson carbonatée, en particulier de la bière.

11. Procédé de clarification d'une suspension par centrifugation produisant un fluide clarifié à l'état liquide (M2) dans une installation selon l'une des revendications 1 à 9, comprenant les étapes suivantes :

    a) traitement de la suspension (M) dans la centrifugeuse (20), en particulier dans un séparateur, avec production du fluide clarifié (M2) sous une pression de fluide (p(M2)) supérieure à 1 bar ;
    b) acheminement du fluide clarifié (M2) à travers le réservoir (1) du dispositif (10), un gaz de précontrainte étant prévu dans le réservoir (1) sous une pression de gaz (p(SG)) satisfaisant la relation suivante :

$$p(M2) = p(SG)$$

un volume de gaz étant établi en fonction d'un niveau limite du fluide (M) dans le réservoir (1) à l'aide d'une conduite d'arrivée (5) pour du gaz de précontrainte et la conduite d'arrivée (5) pour le gaz de précontrainte (SG) présentant un raccord d'évacuation (8) séparé pour un fluide de nettoyage.

12. Procédé selon la revendication 11, **caractérisé en ce que** le gaz de précontrainte est un gaz inerte, en particulier du $CO_2$, du $N_2$ ou un gaz rare.

13. Procédé selon la revendication 11 ou 12, **caractérisé en ce que** le gaz de précontrainte (SG) est placé au voisinage immédiat du fluide clarifié (M2) lors de l'acheminement du fluide clarifié (M2).

14. Procédé selon l'une des revendications 11 à 13, **caractérisé en ce qu'**après le traitement du liquide, un nettoyage en place CIP de l'installation (30), y compris du dispositif (10), est réalisé.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004022078 A1
- DE 4004459 C1
- DE 102014212021 A1